# EUROPEAN PATENT APPLICATION

(11) **EP 3 591 902 A1**
(43) Date of publication of application: **08.01.2020**
(21) Application number: 18181791.7
(22) Date of filing: 04.07.2018
(51) Int. Cl.: H04L 12/28, G06F 8/65, H04L 29/08

(54) **MOBILE DEVICE SHOWING PLANT VIEW AND DASHBOARD**

(71) Applicant: Siemens Schweiz AG, 8047 Zürich (CH)
(72) Inventor: Boscolo Bragadin, Ivano, 6315 Oberägeri (CH)
(74) Representative: Maier, Daniel Oliver

(57) **Abstract**

Mobile device showing plant view and dashboard. A mobile handheld device (1) comprising: at least one first communication interface (2) configured to receive from an appliance (7) an identity key indicative of an identity of the appliance (7); at least one second communication interface (3) configured for bidirectional communication with a remote server (8); a display (4); a memory storing an index table, the index table determining if the memory stores a configuration data set associated with an index value; a processor (6) communicatively coupled to the first and second communication interfaces (2, 3), to the memory, and to the display (4), the processor (6) being configured to: receive an update data set indicative of an updated set of configuration data via the at least one second communication interface (3); receive an identity key indicative of the identify of the appliance (7) via the at least one first communication interface (2); produce an index value from the received identity key; determine from the index table if the memory stores a configuration data set associated with the index value; if the memory stores a configuration data set associated with the index value: load the configuration data set associated with the index value from the memory; produce a graphics signal as a function of the configuration data set and of the update data set; and transmit the graphics signal to the display (4). The first communication interface (2) may provide a scanner and/or a camera. The second communication interface (3) advantageously handles communication with the remote server (8). The mobile handheld device provides functionality to read an identity of an appliance such as an automation appliance, a control appliance, a heating, ventilation, air-conditioning appliance, a smart valve appliance, and/or a hazard detection appliance. The solution according to the present disclosure works provided there is a connection to the (cloud) host. In a sophisticated embodiment, the mobile application and/or the mobile handheld device have access to a local memory. The local memory enables local caching of information stored on the (cloud) host. Information may thus be gathered from the cloud host and cached locally on the mobile handheld device. The solution with local caching does not require a permanent connection to the (cloud) host.

## Description

### Background

The present disclosure relates to a mobile device for displaying information on an appliance. More particularly, the instant disclosure focuses on a mobile device with functionality to display the configuration of a heating/ventilation and/or air-conditioning appliance.

Technical appliances such as control and automation equipment as well as heating, air-conditioning and/or ventilation equipment commonly need configuration. Access to a particular configuration of such an appliance is often useful during maintenance, repair and/or extension of an installation. A configuration may provide information on numbers and on types of heat exchangers, of fluid conveyors, of compressors of a heating, ventilation and/or air conditioning installation.

The international patent application WO2004/024232A1 was filed on 11 September 2003. WO2004/024232A1 teaches a medical device status information system. WO2004/024232A1 discloses a docking station 60 and a status monitor 62. A network 74 enables communication between docking station 60 and status monitor 62. The docking station 60 provides an automated external defibrillator 60 with a status indicator 88. Status indicator 88 may comprise a visual annunciator 20 such as a light-emitting diode.

The patent US5089809 issued on 18 February 1992. An application US623,356 for US5089809 was filed on 7 December 1990. US5089809 deals with remote indication of appliance status. An appliance 22 such as a washing machine is shown on FIG 1 of US5089809. Appliance 22 connects to the AC wiring of a complex via a power cord 24 and a plug 26. The power cord 24 and the plug 26 also couple appliance 22 to a transmitter 28. Transmitter 28 upon detection of a predetermined condition of appliance 22 transmits a signal representing the detected condition to a remote status module 54. In an embodiment, transmitter 28 comprises a code generator 90 and a radio frequency generator 86. The code generator 90 is employed to modulate a radio frequency signal. A 160 kHz signal is then applied to lines 88 via radio frequency generator 86.

The patent US4916439 issued on 10 April 1990. An application US45,725 for US4916439 was filed on 30 April 1987. US4916439 teaches a remote display arrangement for appliances. A remote display arrangement 10 with a detector 16 and with a receiving unit 18 is shown on FIG 1A of US4916439. Detector 18 is communicatively coupled to a washing machine 12 and to a dryer 22. Detector 16 provides an antenna 24 to transmit signals to receiving unit 18. Receiving unit 18 provides an antenna 26 to receive signals from detector 16. US4916439 also teaches an alternate receiving unit 300 with a liquid crystal display 310. Various types of appliance status signals such as cycle running time of a washing machine 12 or of a dryer 22 may be displayed on liquid crystal display 310.

The present disclosure deals with access to configuration data from a mobile device. The solution of the instant disclosure readily and seamlessly provides nuanced access to such data thereby reducing the effort involved in maintenance, repair and extension work.

### Summary

The instant disclosure teaches a mobile handheld device such as a mobile computer and/or a tablet computer and/or a mobile phone and/or a smart mobile phone. The mobile handheld device provides functionality to read an identity of an appliance such as an automation appliance, a control appliance, a heating, ventilation, air-conditioning appliance, a smart valve appliance, and/or a hazard detection appliance. The identity may, by way of non-limiting example, be a serial number and/or a media access control address of a network adaptor and/or a cryptographic key. Once the identity key is retrieved, the mobile handheld device loads a configuration data set associated with the identity key from a memory of the mobile handheld device. The mobile handheld device also checks for update data and updates the configuration data set accordingly.

The present disclosure provides a mobile handheld device comprising: at least one first communication interface configured to receive from an appliance an identity key indicative of an identity of the appliance; at least one second communication interface configured for bidirectional communication with a remote server; a display; a memory storing an index table, the index table determining if the memory stores a configuration data set associated with an index value; a processor communicatively coupled to the at least one first communication interface, and to the at least one second communication interface, and to the memory, and to the display, the processor being configured to: receive an update data set indicative of an updated set of configuration data via the at least one second communication interface; receive an identity key indicative of the identity of the appliance via the at least one first communication interface; produce an index value from the received identity key; determine from the index table if the memory stores a configuration data set associated with the index value; if the memory stores a configuration data set associated with the index value: load the configuration data set associated with the index value from the memory; produce a graphics signal as a function of the configuration data set and of the update data set; and transmit the graphics signal to the display.

The remote server is advantageously located remotely from the mobile handheld device.

The memory advantageously is a memory readable by the processor. It is envisaged that the memory is a non-volatile memory. It is also envisaged that the memory is a non-volatile memory with built-in encryption. That is, any data stored on the memory needs to be deciphered using a cryptographic key. Also, any data are not readily accessible when the memory is illicitly removed from the mobile handheld device. Encrypted memory confers advantages in terms of improved security.

According to an aspect, the memory stores the index table, the index table determining if the memory stores a configuration data set associated with a predetermined index value. The memory is preferably also configured to store at least one configuration data set. The index table can, by way of non-limiting example, be a lookup table.

In an embodiment, the graphics signal comprises information on a dashboard and/or on a plant view of the appliance. Advantageously, the configuration data set comprises information on a dashboard and/or on a plant view of the appliance. Ideally, the update data set also comprises information on a dashboard and/or on a plant view of the appliance.

The at least one first communication interface is preferably different from the at least one second communication interface.

According to an aspect, the configuration data set comprises (current, up-to-date) configuration data associated with and/or for the appliance. According to another aspect, the update data set comprises (updated) configuration data associated with and/or for the appliance.

According to another aspect, the mobile handheld device also comprises at least one driver unit, the at least one driver unit being communicatively coupled to the display, the processor being communicatively coupled to the driver unit, the processor being configured to: transmit the graphics signal to the display via the at least one driver unit.

In an embodiment, the processor is configured to receive from the appliance via the at least one first communication interface an identity key indicative of the identity of the appliance.

According to an aspect, the processor of a mobile handheld device according to the instant disclosure is configured to: produce a revised configuration data set from the update data set; and store the revised configuration data set in the memory. A revised configuration data set based on the update data set confers the advantage of less volatile revised data sets.

In an embodiment, the processor of a mobile handheld device according to the instant disclosure is configured to: produce a current version key from the loaded configuration data set; produce an update version key from the update data set; compare the current version key to the update version key; determine if the update version key is newer than the current version key; if the update version key is newer than the current version key: produce a revised configuration data set from the update data set; and store the revised configuration data set in the memory. A comparison between versions ensures that the mobile handheld device deploys the latest version.

The current version key produced from the loaded configuration data set can, by way of non-limiting example, be a legacy version key.

Ideally, the processor is also configured to delete the loaded (obsolete) configuration data set from the memory thereby replacing the loaded (obsolete) configuration data set with the revised configuration data set. Deletion of obsolete datasets confers benefits in terms of reduced memory usage.

Advantageously, the processor is also configured to update the index table such that the revised configuration data set replaces the loaded (obsolete) configuration data set. In other words, the processor is configured to update the index table such that the revised configuration data set (eventually) becomes the loaded configuration data set. It is also envisaged that the processor is configured to store the updated index table in the memory. An updated index table confers advantages since the mobile handheld device can readily access information.

It is envisaged that the processor of a mobile handheld device according to the instant disclosure is configured to: query via the at least one second communication interface the remote server about availability of an update data set indicative of an updated configuration data set; and if the update data set is available: receive the update data set from the remote server via the at least one second communication interface. This query renders the update process by the mobile handheld device more effective.

The instant disclosure also teaches any of the aforementioned mobile handheld devices, wherein the memory is a non-volatile memory; and wherein the non-volatile memory is secured relative to the mobile handheld device. In an embodiment, the non-volatile memory is mounted to the mobile handheld device. A non-volatile memory secured to or mounted to the mobile handheld device inhibits loss of data.

It is also another object of the instant disclosure to provide any of the aforementioned mobile handheld devices, wherein the at least one first communication interface is selected from one of:
a camera; or
a quick response code scanner; or
a barcode scanner; or
a wireless network interface; or
a power-over-ethernet interface in accordance with IEEE 802.3af-2003, June 2003; or
a near field communication reader; or
a wired network interface; or
a universal serial bus interface; or
a recommended standard 485 interface; or
a smart card reader.

In an embodiment, the at least one first communication interface is configured for unidirectional communication with the appliance. That is, the at least one first communication interface may receive data from the appliance. There is, however, no communication (channel) from the first communication interface to the appliance.

It is also another object of the instant disclosure to provide any of the aforementioned mobile handheld devices, wherein the identity key is selected from one of:
a media access control address;
a serial number; or
a cryptographic key; or
a barcode key; or
a quick response code key.

According to an aspect, the cryptographic key is associated with an asymmetric pair of keys. The cryptographic key may, in particular, be a private key or a public key.

Public/private keys allow for authentication. Public/private keys put a remote server and/or the appliance in a position to verify the identity of mobile handheld device.

It is still a further object of the instant disclosure to provide any of the aforementioned mobile handheld devices, wherein the mobile handheld device comprises at least one user interface configured to receive inputs from a user of the mobile handheld device; the processor being communicatively coupled to, in particular directly coupled to, the at least one user interface, the processor being configured to:
receive a credentials key indicative of user credentials from the at least one user interface;
the credentials key to produce an encrypted credentials signal; and
send the credentials signal to the remote server via the at least one second communication interface.

Access control based on (encrypted) user credentials confers benefits in terms of improved computer security.

In an embodiment, the processor encrypts the credentials key using a cryptographic key derived from a Diffie-Hellman key exchange. Use of a cryptographic key derived from a Diffie-Hellman key change inhibits man-in-the-middle attacks. In another embodiment, the processor reads a cryptographic key from the memory and encrypts the credentials key using the cryptographic key read from the memory. In yet another embodiment, the processor receives a key from the at least one second communication interface and encrypts the credentials key using the key received from the at least one second communication interface. In still another embodiment, the processor receives a key from the remote server via the at least one second communication interface and encrypts the credentials key using the key received from the remote server.

It is also an object of the instant disclosure to provide any of the aforementioned mobile handheld devices, wherein the processor comprises an application-specific integrated circuit, the processor being configured to:
encrypt the credentials key using the application-specific integrated circuit to produce an encrypted credentials key; and
send the encrypted credentials signal to the remote server via the at least one second communication interface.

Application-specific integrated circuits confer benefits in terms of effective computing.

According to an aspect, the application-specific integrated circuit is an integral part of the processor. An application-specific integrated circuit is generally more effective at encryption tasks compared to a general-purpose processor. That way, the application-specific integrated circuit saves energy and/or reduces the computing time required for encryption.

It is a further object of the instant disclosure to provide any of the aforementioned mobile handheld devices, wherein the mobile handheld device comprises at least one user interface configured to receive inputs from a user of the mobile handheld device; the processor being communicatively coupled to, in particular directly coupled to, the at least one user interface, the processor being configured to:
receive a credentials key indicative of user credentials from the at least one user interface; and
produce an index value as a function of, preferably as a direct function of, the received identity key and of the received credentials key, the function being a hash function.

In an embodiment, the processor is configured to receive from a user via the at least one user interface a credentials key indicative of user credentials. User credentials advantageously comprise a username and/or a password. User credentials may also comprise biometric information.

The at least one user interface preferably comprises at least one of:
a touch-sensitive display;
a keyboard;
a fingerprint scanner;
a camera.

A touch-sensitive display can be used for the purposes of displaying information and of reading user input. A touch-sensitive display is a dual-purpose device that reduces complexity and cost. Use of a fingerprint scanner enables a mobile handheld device that provides encryption based on, preferably directly based on, an operator's individual biometric data.

It is envisaged that a hash function is selected from one of
a message digest 5 type hash function;
a secure hash algorithm 1 type hash function;
a secure hash algorithm 2 type hash function;
a secure hash algorithm 3 type hash function;
a secure hash algorithm 256 type hash function; or
a bcrypt type hash function.

In an embodiment, the hash function is a salted hash function and is based on, preferably is directly based on, at least one of:
a message digest 5 algorithm;
a secure hash algorithm no 1;
a secure hash algorithm no 2;
a secure hash algorithm no 3;
a secure hash algorithm no 256; or
a bcrypt algorithm.

It is a further object of the instant disclosure to provide any of the aforementioned mobile handheld devices, wherein the memory comprises a non-volatile and protected portion, the processor being configured to:
carry out a privileged process such that the privileged process is exclusively allowed to read the index table from the non-volatile and protected portion of the memory; and to write the index table to the non-volatile and protected portion of the memory.

The instant disclosure also teaches any of the aforementioned mobile handheld devices, wherein the memory comprises a non-volatile and protected portion, the processor being configured to: carry out a privileged process such that the privileged process is exclusively allowed to: read a configuration data set from the non-volatile and protected portion of the memory; and to write a configuration data set to the non-volatile and protected portion of the memory.

The instant disclosure further teaches any of the aforementioned mobile handheld devices, wherein the memory comprises a non-volatile and protected portion, the processor being configured to: carry out a privileged process such that the privileged process is exclusively allowed to: read an update data set from the non-volatile and protected portion of the memory; and to write an update data set to the non-volatile and protected portion of the memory.

In a practical embodiment, the privileged process is exclusively allocated to the non-volatile and protected portion of the memory such that no other process can access the non-volatile and protected portion of the memory. That is, the privileged process has exclusive access to the non-volatile and protected portion of the memory. The non-volatile and protected portion of the memory may be a page and/or a segment of the memory. Memory protection confers advantages in terms of inhibiting malicious processes from tampering with privileged information.

The instant disclosure also teaches any of the aforementioned mobile handheld devices, wherein the at least one second communication interface is configured for bidirectional communication with another mobile handheld device according to the instant disclosure, the processor of the mobile handheld device being configured to: receive from the other mobile handheld device a request for index data indicative of an index table via the at least one second communication interface; load the index table from the memory in response to the request; produce an index signal from the index table loaded from the memory; and send the index signal to the other mobile handheld device via the at least one second communication interface.

The instant disclosure also teaches any of the aforementioned mobile handheld devices, wherein the at least one second communication interface is configured for bidirectional communication with another aforementioned mobile handheld device, the processor being configured to: receive from the other mobile handheld device a query value via the at least one second communication interface; determine from the index table if the memory stores a configuration data set and/or an update data set associated with the query value; if the memory stores a configuration data set and/or an update data set associated with the query value: load the configuration data set and/or the update data set from the memory; produce a configuration signal from the configuration data set and/or from the update data set loaded from the memory; and send the configuration signal to the other mobile handheld device via the at least one second communication interface.

The instant disclosure also teaches any of the aforementioned mobile handheld devices, wherein the processor is configured to: produce an encrypted index signal from the index table and/or from the configuration data set and/or from the update data set loaded from the memory; and send the encrypted index signal to the other mobile handheld device via the at least one second communication interface.

Peer to peer communication confers advantages in terms of seamless communication and collaboration in amongst a system of networked mobile handheld devices.

The instant disclosure also teaches any of the aforementioned mobile handheld devices, wherein the processor comprises an application-specific integrated circuit, the processor being configured to: produce an encrypted index signal from the index table and/or from the configuration data set and/or from the update data set loaded from the memory using the application-specific integrated circuit.

Application-specific integrated circuits confer benefits in terms of effective computing.

The instant disclosure further teaches a non-transitory, tangible computer readable medium having instructions executable by a processor of a mobile handheld device, the mobile handheld device comprising at least one first communication interface and at least one second communication interface and a memory and a display, that, when executed by the processor, cause the processor of the mobile handheld device to perform: receiving an update data set indicative of an updated set of configuration data via the at least one second communication interface; receiving an identity key indicative of an identity of the appliance via the at least one first communication interface; producing an index value from the received identity key; determining from the index table whether the memory stores a configuration data set associated with the index value; if the memory stores a configuration data set associated with the index value: load the configuration data set associated with the index value from the memory; produce a graphics signal as a function of the configuration data set and as a function of the update data set; and transmit the graphics signal to the display.

### Brief description of the drawings

Various features will become apparent to those skilled in the art from the following detailed description of the disclosed non-limiting embodiments. The drawings that accompany the detailed description can be briefly described as follows:
FIG 1 schematically depicts a mobile handheld device, in particular a mobile computer, according to the instant disclosure.
FIG 2 is a schematic showing communication channels between a mobile handheld device, in particular between a mobile computer, and an appliance and a remote server.
FIG 3 is a schematic showing communication channels between a mobile handheld device, in particular between a mobile computer, and an appliance.
FIG 4 is a close-up detailed view of the first wireless communication interface and of the second wireless communication interface.
FIG 5 provides a close-up detailed view of a processor of a mobile handheld device, in particular of a mobile computer.

### Detailed decription

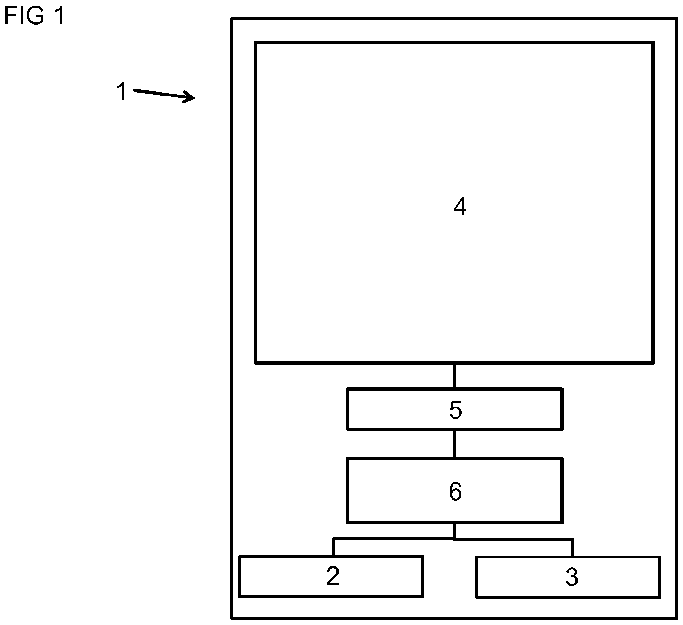

FIG 1 shows a mobile handheld device 1. Mobile handheld device 1 may, in an embodiment, be a mobile augmented reality device. It is also envisaged that mobile handheld device 1 is a mobile device 1, in particular a mobile phone 1, a smart mobile phone 1, a tablet computer 1, a pair of virtual reality glasses 1 and/or a virtual reality headset 1.

Mobile handheld device 1 comprises a user interface such as a touch-screen display 4. Display 4 may, by way of non-limiting example, comprise a liquid crystal display and/or a display made up of organic light-emitting diodes, and/or electronic paper. Electronic paper in conjunction with a mobile handheld device 1 or in conjunction with a mobile device 1 offers benefits in terms of reduced energy consumption. Electronic paper in conjunction with a mobile handheld device 1 or in conjunction with a mobile device 1 also offers benefits in terms of improved battery life.

The display 4 connects to a driver unit 5 such as a graphics card 5. The graphics card 5 advantageously comprises a plurality of parallel graphics processors. The display 4 is configured to visually annunciate a status of an appliance based on, preferably directly based on, a graphics signal received from the graphics driver unit 5. The display 4 is also configured to visually annunciate dashboard information on an appliance based on, preferably directly based on, a graphics signal received from the graphics driver unit 5. The display 4 is further configured to visually annunciate plant view information on an appliance based on, preferably directly based on, a graphics signal received from the graphics driver unit 5.

The skilled person selects a suitable communication bus and/or a suitable physical connection to communicatively couple graphics driver unit 5 and display 4.

Display 4 can, by way of non-limiting example, comprise a monochrome display, a grayscale display, or a color screen with a suitable resolution. Suitable resolutions include, but are not limited to, 426 x 320 pixels, 470 x 320 pixels, 640 x 480 pixels, or 960 x 720 pixels etc.

Mobile handheld device 1 also comprises a processor 6. Processor 6 may, by way of non-limiting example, comprise a microprocessor and/or a microcontroller. In an embodiment, processor 6 is based on, preferably is directly based on, a reduced instruction set architecture. In an alternate embodiment, processor 6 is based on, preferably is directly based on, a complex instruction set architecture. Processor 6 is communicatively coupled to, in particular is directly communicatively coupled to, graphics driver unit 5. The skilled person selects a suitable communication bus and/or a suitable communication bus protocol to communicatively couple the processor 6 to the graphics driver unit 5. According to an aspect, the graphics driver unit 5 is an integral component of the processor 6. That is, the graphics driver unit 5 and the processor 6 are arranged in the same chip, preferably on the same system on a chip (SoC).

A first communication interface 2 enables connection of mobile handheld device 1 to an appliance. According to an aspect, the first communication interface 2 is or comprises a camera, in particular a mobile phone camera. The camera advantageously provides functionality to take a picture of a quick response code that is attached to or secured relative to or printed on a housing of an appliance. The camera advantageously also provides functionality to take a picture of and/or to scan a barcode. In an alternate embodiment, the first communication interface 2 is or comprises a radio frequency identification transponder. The radio frequency identification transponder is operable to read a tag for radio frequency identification. According to an aspect, the tag for radio frequency identification is a passive tag. That is, the tag for radio frequency identification does not connect to a power supply. In yet another embodiment, the first communication interface 2 is or comprises a near field communication transponder. The near field communication transponder is operable to read a signal originating from another unit that provides near field communication. The near field communication transponder is, in particular, operable to read a signal originating from an appliance that provides near field communication.

In an embodiment, the first communication interface 2 comprises a power-over-ethernet interface in accordance with IEEE 802.3af-2003, June 2003. Connection of the mobile handheld devices 1 to an appliance via a power-over-ethernet interface allows mobile handheld devices 1 to draw and/or harvest power from the appliance 7. In so doing, mobile handheld devices 1 become more independent of power-outlets installed in a building.

The first communication interface 2 is communicatively coupled to, in particular is directly communicatively coupled to, the processor 6. The skilled person selects a suitable communication bus and/or a suitable communication bus protocol to communicatively couple the first communication interface 2 to the processor 6. According to an aspect, communication between the first communication interface 2 and the processor 6 is unidirectional as opposed to bidirectional. The processor 6 may only receive data from the first communication interface 2. The first communication interface 2 may not receive data from the processor 6. Unidirectional communication offers benefits in terms of reduced complexity and in terms of lower cost. In an alternate embodiment, communication between the first communication interface 2 and the processor 6 is bidirectional.

A second communication interface 3 enables connection of the mobile handheld device 1 to a remote server. According to an aspect, the second communication interface 3 is or comprises a wireless local area network unit and/or a Bluetooth® unit and/or a KNX® radio frequency unit, and/or an Enocean® unit and/or a Zigbee® unit. It is envisaged that the second communication interface 3 provides functionality for encrypted communication between the mobile handheld device 1 and a remote server. It is further envisaged that the second communication interface 3 comprises a wireless network adaptor and/or a wireless network card.

The second communication interface 3 is communicatively coupled to, in particular is directly communicatively coupled to, the processor 6. The skilled person selects a suitable communication bus and/or a suitable communication bus protocol to communicatively couple the second communication interface 3 to the processor 6. Communication between the second communication interface 3 and the processor 6 is preferably bidirectional. Bidirectional communication enables the mobile handheld device 1 to send data to and to receive data from a remote server. The mobile handheld device 1 may thus send a request to a remote server and obtain a response to its request.

Second communication interface 3 communicating over a wireless bus advantageously provides a radio frequency module such as a module capable of quaternary phase-shift keying. It is also envisaged that the radio frequency module improves on data transmission by limiting sizes of message blocks and/or by extra data redundancy. These functionalities may prove useful in environments wherein communication between the second communication interface 3 and a remote server is hindered by obstacles such as thick concrete walls. These functionalities may also prove useful in environments wherein the second communication interface 3 communicates with a remote server over long distances.

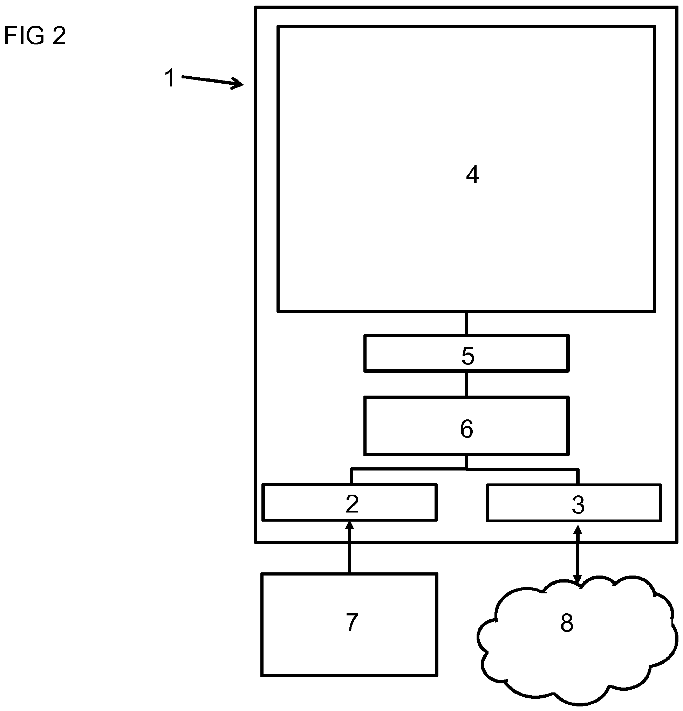

Now referring to FIG 2, a mobile handheld device 1 is shown in communication with an appliance 7. The mobile handheld device 1 also is in communication with a remote server 8. According to an aspect, the remote server 8 is or comprises a cloud server.

The first communication interface 2 advantageously handles communication with the appliance 7. To that end, the first communication interface 2 may provide a scanner and/or a camera. The first communication interface 2 then uses the scanner and/or the camera to read a barcode and/or a quick response code. The barcode and/or the quick response can be mounted to or secured relative to or affixed to or printed on a housing of the appliance 7. In an alternate embodiment, the first communication interface 2 provides an infrared receiver. The first communication interface 2 then reads an infrared signal originating from the appliance 7. To that end, an infrared transmitter can be mounted to or secured relative to or affixed to a housing of the appliance 7. In yet another embodiment, the first communication interface 2 provides a receiver for radio frequency identification signals. The first communication interface 2 then reads a radio frequency identification signal originating from the appliance 7. To that end, a radio frequency identification tag can be mounted to or secured relative to or affixed to a housing of the appliance 7. In still another embodiment, the first communication interface 2 provides a receiver for near field communication. The first communication interface 2 then reads a near field communication signal originating from the appliance 7. To that end, a transponder for near field communication can be mounted to or secured relative to or affixed to a housing of the appliance 7.

The first communication interface 2 is thus communicatively coupled to, in particular is directly communicatively coupled to, an appliance 7. According to an aspect, communication between the first communication interface 2 and the appliance 7 is unidirectional as opposed to bidirectional. The first communication interface 2 may only receive data and/or signals from the appliance 7. The first communication interface 2 may not send data and/or signals to the appliance 7. Unidirectional communication offers benefits in terms of reduced complexity and in terms of lower cost. In an alternate embodiment, communication between the first communication interface 2 and the appliance 7 is bidirectional. The skilled person selects a suitable communication bus and/or a suitable communication bus protocol to establish bidirectional communication between the first communication interface 2 and the appliance 7. The skilled person may, by way of non-limiting example, rely on a message queuing telemetry transport (MQTT) protocol for such purposes.

The second communication interface 3 advantageously handles communication with the remote server 8. To that end, the second communication interface 3 may provide a radio frequency module. The second communication interface 3 reads radio frequency signals originating from the remote server 8 using the radio frequency module. The radio frequency signals may, by way of non-limiting example, be signals originating from a wireless local area network and/or from a Bluetooth® network and/or from a KNX® radio frequency network, and/or from an Enocean® network and/or from a Zigbee® network. The second communication interface 3 ideally also transmits such radio frequency signals to the remote server 8. It is envisaged that the second communication interface 3 also comprises an aerial to transmit and to receive such signals.

According to an aspect, a web server runs on the remote server 8. The web server may listen for connections on transmission control protocol / internet protocol port 80 or 443. The web server of appliance 7 may optionally decrypt and encrypt traffic. The web server may rely on a Diffie-Hellman key exchange for such purposes. The remote server 8 also provides a remote communication interface. Data are forwarded from the web server running on the remote server 8 to the remote communication interface of the remote server 8. The remote communication interface modulates data originating from the web server to produce radio frequency signals. The radio frequency signals are then transmitted to the mobile handheld device 1 and received by the second communication interface 3. It is envisaged that the remote communication interface also comprises an aerial/an antenna to transmit and to receive such radio frequency signals.

Likewise, the remote communication interface demodulates radio frequency signals originating from the mobile handheld device 1 to produce data. These data are then forwarded to the web server of the remote server 8.

The second communication interface 3 is thus communicatively coupled to, in particular is directly communicatively coupled to, the remote server 8. According to an aspect, communication between the second communication interface 3 and the remote server 8 is bidirectional as opposed to unidirectional. The person with ordinary skill in the art selects a suitable communication bus and/or a suitable communication bus protocol to establish bidirectional communication between the second communication interface 3 and the web server of the remote server 8. The skilled person may, in particular, select a connection-oriented communication bus protocol. According to an alternate aspect, the skilled person selects a connectionless communication bus protocol.

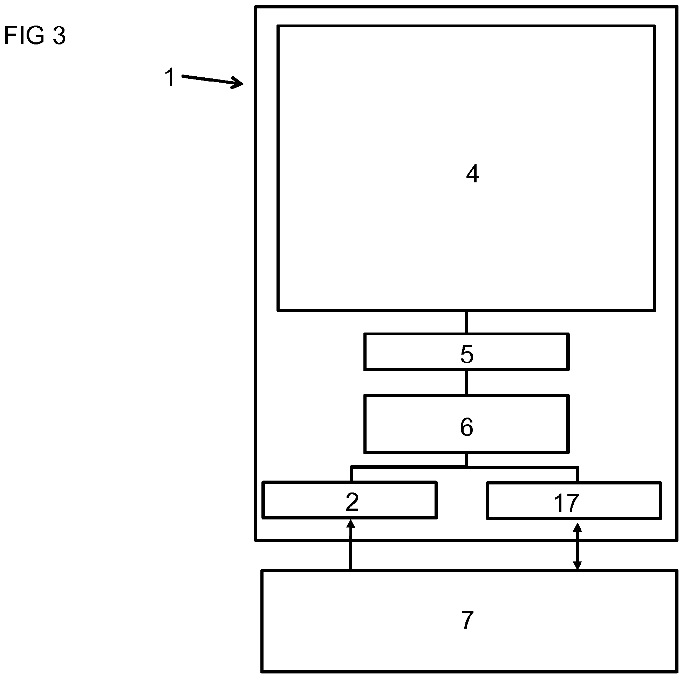

Now turning to FIG 3, a mobile handheld device 1 is shown in communication with an appliance 7. The embodiment of FIG 3 assumes a first communication channel between the first communication interface 2 and the appliance 7. Communication between the first communication interface 2 and the appliance 7 operates as described in the notes on FIG 2. The embodiment of FIG 3 also assumes a second communication channel between a maintenance interface 17 and the appliance 7.

The maintenance interface 17 advantageously enables bidirectional communication with the appliance 7. To that end, the maintenance interface 17 may provide a radio frequency module. The maintenance interface 17 reads radio frequency signals originating from the appliance 7. The radio frequency signals may, by way of non-limiting example, be signals originating from a wireless local area network and/or from a Bluetooth® network and/or from a KNX® radio frequency network, and/or from an Enocean® network and/or from a Zigbee® network. The maintenance interface 17 ideally also transmits such radio frequency signals to the appliance 7. It is envisaged that the maintenance interface 17 also comprises an aerial/an antenna to transmit and to receive such signals.

In an embodiment, the maintenance interface 17 comprises a power-over-ethernet interface in accordance with IEEE 802.3af-2003, June 2003. Connection of mobile handheld devices 1 to an appliance via a power-over-ethernet interface allows mobile handheld device 1 to draw and/or harvest power from the appliance 7. In so doing, mobile handheld devices 1 become more independent of power-outlets installed in a building.

According to an aspect, a web server runs on the appliance 7. The web server may listen for connections on transmission control protocol/internet protocol port 80 or 443. The web server of the appliance 7 may optionally decrypt and encrypt traffic. The web server may rely on a Diffie-Hellman key exchange for such purposes. The appliance 7 also provides a remote communication interface. Data are forwarded from the web server of the appliance 7 to the remote communication interface of the appliance 7. The remote communication interface modulates data originating from the web server of the appliance 7 to produce radio frequency signals. The radio frequency signals are then transmitted to the mobile handheld device 1 and received by the maintenance interface 17. It is envisaged that the remote communication interface also comprises an aerial to transmit and to receive such radio frequency signals.

Likewise, the remote communication interface of the appliance 7 demodulates radio frequency signals originating from the mobile handheld device 1 to produce data. These data are then forwarded to the web server of the appliance 7.

The maintenance interface 17 is thus communicatively coupled to, in particular is directly communicatively coupled to, the appliance 7. According to an aspect, communication using the second communication channel between the maintenance interface 17 and the appliance 7 is bidirectional as opposed to unidirectional. The person with ordinary skill in the art selects a suitable communication bus and/or a suitable communication bus protocol to establish bidirectional communication between the maintenance interface 17 and (the web server of) the appliance 7. The skilled person may, in particular, select a connection-oriented communication bus protocol. According to an alternate aspect, the skilled person selects a connectionless communication bus protocol. The skilled person may, by way of non-limiting example, rely on a message queuing telemetry transport (MQTT) protocol for communication between the maintenance interface 7 and the appliance 7.

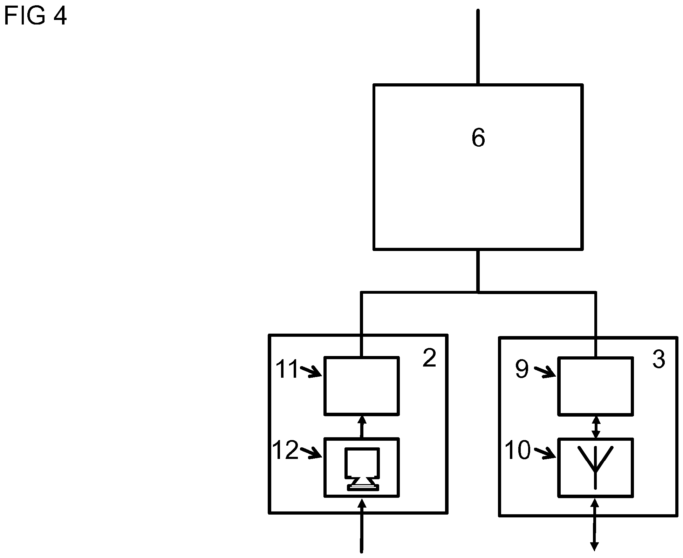

FIG 4 provides additional details of the first 2 and second 3 communication interfaces. The first communication interface 2 as shown on FIG 4 comprises a camera or a scanner 12. The camera or the scanner 12 may, by way of non-limiting example, be a camera or a scanner recording visible light with wavelengths between 400 nm and 800 nm, especially between 500 nm and 800 nm, in a particular embodiment between 600 nm and 800 nm. A narrow range of wavelengths makes the arrangement less susceptible to interference. The camera or the scanner 12 may, by way of another non-limiting example, be a camera or a scanner recording infrared light with wavelengths larger than 800 nm, especially larger than 950 nm, in a particular embodiment larger than 1200 nm. Use of infrared light proves useful when reading quick response codes or bar codes that are invisible to the human observer since they are printed in the infrared regime.

The camera or the scanner 12 communicatively couples to an image processor 11. The image processor 11 communicatively couples to the processor 6. According to an aspect, the image processor 11 is operable to process barcode signals. The image processor 11 thus receives signals from the camera or from the scanner 12. The image processor 11 extracts barcode data from such signals. The image processor 11 eventually submits data indicative of a barcode and/or comprising barcode data to the processor 6. It is envisaged that the image processor 11 is an integral component of the processor 6. That is, the image processor 11 and the processor 6 are arranged on the same chip. Ideally, the image processor 11 and the processor 6 are arranged on the same system on a chip (SoC).

According to an alternate aspect, the image processor 11 is operable to process quick response code signals. The image processor 11 thus receives signals from the camera or from the scanner 12. The image processor 11 extracts quick response code data from such signals. The image processor 11 eventually submits data indicative of a quick response code and/or comprising quick response code data to the processor 6. It is envisaged that the image processor 11 is an integral component of the processor 6. That is, the image processor 11 and the processor 6 are arranged on the same chip. Ideally, the image processor 11 and the processor 6 are arranged on the same system on a chip (SoC).

The second communication interface 3 as shown on FIG 4 comprises an aerial 10/an antenna 10. The aerial/antenna 10 may, by way of non-limiting example, be an aerial/antenna for frequencies between 470 MHz and 862 MHz, for frequencies between 2.4 GHz and 2.5 GHz, and/or for frequencies between 5.0 GHz and 5.9 GHz. It is envisaged that the aerial/antenna 10 is a directional antenna. Low frequencies offer benefits in terms of long range, whereas high frequencies offer benefits in terms of reduced interference. Directional antennae offer benefits in terms of improved signal to noise.

The aerial 10 communicatively couples to a demodulator/modulator unit 9. The demodulator/modulator unit 9 communicatively couples to the processor 6. According to an aspect, the demodulator/modulator unit 9 is operable to process amplitude-modulated signals and/or frequency-modulated signals. The demodulator/modulator unit 9 thus receives signals from the aerial 10. The demodulator/modulator unit 9 extracts data and/or data packets from such signals. The demodulator/modulator unit 9 eventually submits data and/or data packets to the processor 6. It is envisaged that the demodulator/modulator unit 9 is an integral component of the processor 6. That is, the demodulator/modulator unit 9 and the processor 6 are arranged on the same chip. Ideally, the demodulator/modulator unit 9 and the processor 6 are arranged on the same system on a chip (SoC).

In an embodiment, the second communication interface 3 comprises a power-over-ethernet interface in accordance with IEEE 802.3af-2003, June 2003. Connection of mobile handheld devices 1 to an appliance via a power-over-ethernet interface allows mobile handheld devices 1 to draw and/or harvest power from the appliance 7. In so doing, the mobile handheld devices 1 become more independent of power-outlets installed in a building.

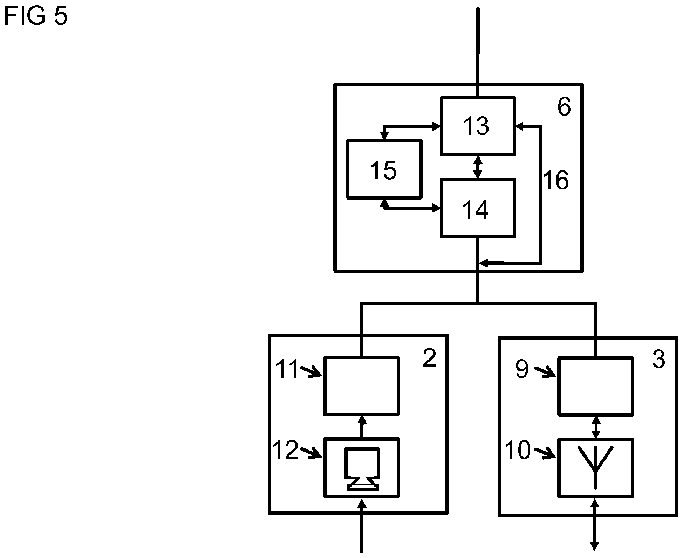

FIG 5 provides additional details of the processor 6. The processor 6 as shown on FIG 5 comprises an application-specific integrated circuit 14, a memory 15, and a microprocessor/microcontroller 13. According to an aspect, the memory 15 is a non-volatile memory.

The application-specific integrated circuit 14 is communicatively coupled to, in particular is directly communicatively coupled to, the demodulator/modulator 9. The application-specific integrated circuit 14 is also communicatively coupled to, in particular is directly communicatively coupled to, the memory 15. The application-specific integrated circuit 14 may thus read data from and/or send data to the demodulator/modulator 9. In an embodiment, the application-specific integrated circuit 14 functions to decipher data read from the demodulator/modulator 9. To that end, the application-specific integrated circuit 14 may employ a symmetric or an asymmetric key. The symmetric key may, in particular, be a key negotiated via a Diffie-Hellman key exchange. The asymmetric key may, in particular, be part of a public/private key pair. It is envisaged that the application-specific integrated circuit 14 reads a key such as an asymmetric key from the memory 15 and employs that key to decipher data read from the demodulator/modulator unit 9.

In an embodiment, the application-specific integrated circuit 14 can also function to encrypt data to be sent to the demodulator/modulator 9. To that end, the application-specific integrated circuit 14 may employ a symmetric or an asymmetric key. The symmetric key may, in particular, be a key negotiated via a Diffie-Hellman key exchange. The asymmetric key may, in particular, be part of a public/private key pair. It is envisaged that the application-specific integrated circuit 14 reads a key such as an asymmetric key from the memory 15 and employs that key to encrypt data to be sent to the demodulator/modulator unit 9.

Dedicated-purpose controllers such as application-specific integrated circuits are generally more effective at tasks such as encryption or decryption as compared to general purpose controllers. It is envisaged that the application-specific integrated circuit 14 is an integral component of the processor 6. That is, the application-specific integrated circuit 14 and the microcontroller/microprocessor 13 are arranged on the same chip. Ideally, the pplication-specific integrated circuit 14 and the microcontroller/microprocessor 13 are arranged on the same system on a chip (SoC).

FIG 5 also shows an optional bypass link 16. The bypass link 16 enables direct communication between the microcontroller/microprocessor 13 and the demodulator/modulator unit 9. The bypass link 16 proves useful where no encoding or decoding is required. The bypass link 16 also proves useful where the microcontroller/microprocessor 13 can directly process data originating from the demodulator/modulator unit 9.

The microcontroller/microprocessor 13 is advantageously employed to carry out tasks other than decoding/encoding or processing of graphics signals. It is envisaged that the microcontroller/microprocessor 13 runs an operating system. The operating system may, for instance, be an Android® operating system, a Windows® operating system, or a Linux® operating system such as Meego®. The operating system may be a system specifically tailored to mobile handheld devices 1 and/or to mobile devices 1. The operating system may also be general-purpose.

In other words, the instant disclosure teaches any of the aforementioned mobile handheld devices 1, wherein the first communication interface 2 is configured to record an infrared light signal, wherein the infrared light signal has an optical wavelength exceeding 800 nm.

It is envisaged that the processor 6 comprises an application-specific integrated circuit 14, the processor 6 being configured to:
decode received data to produce decoded data using its application-specific integrated circuit 14.

The instant disclosure further teaches any of the aforementioned mobile handheld devices 1, wherein the mobile handheld device 1 comprises a non-volatile memory 15 readable by the processor 6, the non-volatile memory 15 storing a cryptographic key, the processor 6 being configured to:
read the cryptographic key from the non-volatile memory 15; and
decode the received data using the cryptographic key to produce decoded data.

The instant disclosure further teaches any of the aforementioned mobile handheld devices 1, wherein the second communication interface 3 is configured to:
receive data from the processor 6;
modulate the received data to produce a signal; and
send the signal to the remote server 8.

It is envisaged that the second communication interface 3 comprises an aerial 10 and a demodulator/modulator unit 9. The second communication interface 3 is configured to:
modulate the received data to produce a signal using its demodulator/modulator unit 9; and
send the signal to the remote server 8 using its aerial 10.

The instant disclosure further teaches any of the aforementioned mobile handheld devices 1, wherein the processor 6 is configured to:
send status information data to the graphics driver unit 5; and
wherein the graphics driver unit 5 is configured to:
   receive the status information data from the processor 6;
   produce a graphics signal from the received status information data 6; and
   send the graphics signal to the display 4;
wherein the display 4 is configured to:
   receive the graphics signal from the graphics driver unit 5; and
   display status information as a function, preferably as a direct function of, of the received graphics signal.

Direct functions exclusively depend on the arguments specified. Direct functions may contain parameters that are not treated as arguments.

The instant disclosure further teaches any of the aforementioned mobile handheld devices 1 or non-transitory computer readable media, wherein the processor 6 is configured to or is caused to perform:
receive an identity key indicative of the identity of the appliance 7 from the first communication interface 2;
decode the received identity key to produce decoded identity key; and
produce request data from the decoded identity key.

The instant disclosure also teaches any of the aforementioned mobile handheld devices 1, wherein the mobile handheld device 1 comprises a non-volatile memory 15 readable by the processor 6, the non-volatile memory 15 storing a cryptographic key, the processor 6 being configured to:
read the cryptographic key from the non-volatile memory 15; and
decode the received identity key using the cryptographic key to produce decoded identity key.

The present disclosure also relates to a mobile device for displaying information on an appliance. More particularly, the instant disclosure also focuses on a mobile device with functionality to provide a service platform for customers.

Contemporary solutions for heating, ventilation and/or air conditioning do not provide a track or log regarding initial configuration during production or commissioning. Those solutions also lack a track or a log regarding initial configuration(s) or technical servicing in the field.

The present disclosure deals with access to configuration data associated with a heating/ventilation and/or air conditioning appliance. The solution of the instant disclosure provides flexible and nuanced access to such data thereby reducing the effort involved in maintenance, repair and/or extension work.

A factory tool is provided which relates information such as
the type of a heating, ventilation and/or air-conditioning appliance,
its configuration, and
its parameters
to a serial number of the appliance. The information is stored on a host. The host preferably is a cloud computer. That is, the host is installed in a location remote from the heating, ventilation and/or air-conditioning appliance. Accordingly, customers gain access for every installed heating, ventilation and/or air-conditioning appliance to information such as
when the appliance was produced and/or
its configuration during production or commissioning.

The instant disclosure also teaches a mobile application. The mobile application functions to register changes for an appliance. The mobile application also operates to store such changes on the aforementioned (cloud) host. The mobile application thus enables customers to collect all service related information of an appliance on the aforementioned (cloud) host. It is envisaged that such information is also associated with the serial number and/or associated with the type of a heating, ventilation and/or air-conditioning appliance,
its configuration, and
its parameters.

In an embodiment, a mobile handheld device such as a mobile computer and/or a tablet computer and/or a mobile phone and/or a smart mobile phone is provided. The mobile handheld device stores and/or runs the aforementioned mobile application.

According to an aspect of the instant disclosure, the mobile application as described above also provides functionality to
install new firmware on an appliance,
install and run software packages, and/or
install configuration data and/or parameters
that are loaded from the (cloud) host.

According to another aspect of the instant disclosure, customers may make
new or revised firmware,
additional software packages and/or
new or revised configuration data and/or parameters
available on the (cloud) host. Service personnel may connect mobile handheld devices to the (cloud) host and also to an appliance for heating, ventilation, and/or air conditioning. Service personnel may then install latest
improvements,
bug fixes,
security fixes and/or
parameter sets
on a heating, ventilation and/or air conditioning appliance. Documentation and/or checklists related to such appliances can be made available and can be deployed in the same fashion.

The solution of the instant disclosure enables lifetime tracking of an appliance. In particular, information such as
installed software packages,
configuration data, and/or
details of maintenance, repair and/or extension works
can be tracked.

It also becomes technical feasible to check what updates will become available for a heating, ventilation and/or air-conditioning appliance. In addition, details with time stamps of
firmware,
software packages, and/or of
configuration data and/or parameters
become readily available and/or are tracked.

The solution according to the present disclosure works provided there is a connection to the (cloud) host. In a sophisticated embodiment, the mobile application and/or the mobile handheld device have access to a local memory. The local memory enables local caching of information stored on the (cloud) host. Information is detailed above may thus be gathered from the cloud host and cached locally on the mobile handheld device. The solution with local caching does not require a permanent connection to the (cloud) host.

Any steps of a method according to the present disclosure may be embodied in hardware, in a software module executed by a processor, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

### Reference numerals

1 mobile handheld device
2 first communication interface
3 second communication interface
4 display and/or user interface
5 driver unit, in particular graphics card
6 processor, in particular microprocessor and/or microcontroller
7 appliance
8 remote server
9 demodulator/modulator unit
10 receiving unit, in particular antenna
11 demodulator/modulator unit, in particular image processor
12 receiving unit, camera
13 microprocessor and/or microcontroller
14 application-specific integrated circuit
15 memory, in particular non-volatile memory
16 bypass link
17 maintenance interface

## Claims

1. A mobile handheld device (1) comprising:
at least one first communication interface (2) configured to receive from an appliance (7) an identity key indicative of an identity of the appliance (7);
at least one second communication interface (3) configured for bidirectional communication with a remote server (8);
a display (4);
a memory (15) storing an index table, the index table determining if the memory (15) stores a configuration data set associated with an index value;
a processor (6) communicatively coupled to the at least one first communication interface (2), to the at least one second communication interface (3), to the memory (15), and to the display (4), the processor (6) being configured to:
receive an update data set indicative of an updated set of configuration data via the at least one second communication interface (3);
receive an identity key indicative of the identity of the appliance (7) via the at least one first communication interface (2);
produce an index value from the received identity key;
determine from the index table if the memory (15) stores a configuration data set associated with the index value;
if the memory (15) stores a configuration data set associated with the index value:
load the configuration data set associated with the index value from the memory (15);
produce a graphics signal as a function of the configuration data set and of the update data set; and
transmit the graphics signal to the display (4).

2. The mobile handheld device (1) according to claim 1, wherein the processor (6) is configured to:
produce a revised configuration data set from the update data set; and
store the revised configuration data set in the memory (15).

3. The mobile handheld device (1) according to any of the claims 1 or 2, wherein the processor (6) is configured to:
produce a current version key from the loaded configuration data set;
produce an update version key from the update data set;
compare the current version key to the update version key;
determine if the update version key is newer than the current version key;
if the update version key is newer than the current version key:
produce a revised configuration data set from the update data set; and
store the revised configuration data set in the memory (15).

4. The mobile handheld device (1) according to any of the claims 1 to 3, wherein the processor (6) is configured to:
query via the at least one second communication interface (3) the remote server about availability of an update data set indicative of an updated configuration data set; and
if the update data set is available:
receive the update data set from the remote server via the at least one second communication interface (3).

5. The mobile handheld device (1) according to any of the claims 1 to 4, wherein the memory (15) is a non-volatile memory (15); and
wherein the non-volatile memory (15) is secured relative to the mobile handheld device (1).

6. The mobile handheld device (1) according to any of the claims 1 to 5, wherein the at least one first communication interface (2) is selected from one of:
a camera; or
a quick response code scanner; or
a barcode scanner; or
a wireless network interface; or
a power-over-ethernet interface; or
a near field communication reader; or
a wired network interface; or
a universal serial bus interface; or
a recommended standard 485 interface; or
a smart card reader.

7. The mobile handheld device (1) according to any of the claims 1 to 6, wherein the identity key is selected from one of:
a media access control address; or
a serial number; or
a cryptographic key; or
a barcode key; or
a quick response code key.

8. The mobile handheld device (1) according to any of the claims 1 to 7, wherein the mobile handheld device (1) comprises at least one user interface (4) configured to receive inputs from a user of the mobile handheld device (1), the processor (6) being communicatively coupled to the at least one user interface (4), the processor (6) being configured to:
receive a credentials key indicative of user credentials from the at least one user interface (4); and
send the credentials signal to the remote server (8) via the at least one second communication interface (3).

9. The mobile handheld device (1) according to claim 8, wherein the processor (6) comprises an application-specific integrated circuit (14), the processor (6) being configured to:
encrypt the credentials key using the application-specific integrated circuit (14) to produce an encrypted credentials signal;
send the encrypted credentials signal to the remote server (8) via the at least one second communication interface (3).

10. The mobile handheld device (1) according to any of the claims 1 to 9, wherein the mobile handheld device (1) comprises at least one user interface (4) configured to receive inputs from a user of the mobile handheld device (1), the processor (6) being communicatively coupled to the at least one user interface (4), the processor (6) being configured to:
receive a credentials key indicative of user credentials from the at least one user interface (4); and
produce an index value as a function of the received identity key and as a function of the received credentials key, the function being a hash function.

11. The mobile handheld device (1) according to any of the claims 1 to 10, wherein the memory (15) comprises a non-volatile and protected portion, the processor (6) being configured to:
carry out a privileged process such that the privileged process is exclusively allowed to:
read the index table from the non-volatile and protected portion of the memory (15); and to
write the index table to the non-volatile and protected portion of the memory (15).

12. The mobile handheld device (1) according to any of the claims 1 to 11, wherein the at least one second communication interface (3) is configured for bidirectional communication with another mobile handheld device (1) according to any of the claims 1 to 11, the processor (6) being configured to:
receive from the other mobile handheld device (1) a request for index data indicative of an index table via the at least one second communication interface (3);
load the index table from the memory (15) in response to the request;
produce an index signal from the index table loaded from the memory (15); and
send the index signal to the other mobile handheld device (1) via the at least one second communication interface (3).

13. The mobile handheld device (1) according to claim 12, wherein the processor (6) is configured to:
produce an encrypted index signal from the index table loaded from the memory (15);
send the encrypted index signal to the other mobile handheld device (1) via the at least one second communication interface (3).

14. The mobile handheld device (1) according to claim 12, wherein the processor (6) comprises an application-specific integrated circuit (14), the processor (6) being configured to:
produce an encrypted index signal from the index table loaded from the memory (15) using the application-specific integrated circuit (14).

15. A non-transitory, tangible computer readable medium having instructions executable by a processor (6) of a mobile handheld device (1), the mobile handheld device (1) comprising at least one first communication interface (2) and at least one second communication interface (3) and a memory (15) and a display (4), that, when executed by the processor (6), cause the processor (6) of the mobile handheld device (1) to perform:
receiving an update data set indicative of an updated set of configuration data via the at least one second communication interface (3);
receiving an identity key indicative of an identity of the appliance (7) via the at least one first communication interface (2);
producing an index value from the received identity key;
determining from the index table whether the memory (15) stores a configuration data set associated with the index value;
if the memory (15) stores a configuration data set associated with the index value:
load the configuration data set associated with the index value from the memory (15);
produce a graphics signal as a function of the configuration data set and as a function of the update data set; and
transmit the graphics signal to the display (4).
